# FASCICULE DE BREVET EUROPEEN

(11) **EP 1 069 950 B1**
(45) Date de publication et mention de la délivrance du brevet: **12.12.2001**
(21) Numéro de dépôt: 99910468.0
(22) Date de dépôt: 31.03.1999
(51) Int. Cl.: B01J 35/00

(54) **COMPOSITION PHOTOCATALYTIQUE**
KATALITISCHE ZUSAMMENSTELLUNG
PHOTOCATALYTIC COMPOSITION

(30) Priorité: 03.04.1998 FR 9804401
(43) Date de publication de la demande: 24.01.2001
(73) Titulaire: Ahlstrom Research and Competence Center, 38780 Pont Eveque (FR)
(72) Inventeur: ESCAFFRE, Pascale, F-38160 La Côte Saint André (FR); GIRARD, Pierre, F-38330 Saint Ismier (FR); DUSSAUD, Joseph, F-38200 Vienne (FR); BOUVIER, Léonie, F-38440 Beauvoir de Marc (FR)
(74) Mandataire: Vuillermoz, Bruno
(86) Numéro de dépôt international: FR9900748
(87) Numéro de publication internationale: WO9951345

(56) Documents cités:
- EP-A- 0 737 513
- WO-A-97/00134
- DATABASE WPI Section Ch, Week 9736 Derwent Publications Ltd., London, GB; Class A85, AN 97-391022 XP002088212 & JP 09 171801 A (NIPPON SODA CO) , 30 juin 1997
- DATABASE WPI Section Ch, Week 9750 Derwent Publications Ltd., London, GB; Class J04, AN 97-544511 XP002088214 & JP 09 262483 A (TOSHIBA LIGHTECH KK) , 7 octobre 1997
- DATABASE WPI Section Ch, Week 9650 Derwent Publications Ltd., London, GB; Class A26, AN 96-502934 XP002088215 & JP 08 259891 A (MATSUSHITA ELECTRIC WORKS LTD), 8 octobre 1996

## Description

L'invention concerne une nouvelle composition photocatalytique, son procédé de fabrication et son utilisation.

Elle se rapporte également à un média filtrant recouvert de cette composition photocatalytique, de même que son procédé de fabrication et son utilisation.

Dans la suite de la description et dans les revendications, par «agent photocatalyseur », on désigne un agent apte à détruire les différents polluants organiques présents dans l'air ou dans l'eau et ce, par réaction photochimique provoquée par l'irradiation des rayons ultra-violet (UV). Cette réaction chimique est largement connue sous le terme de photocatalyse et mise en oeuvre pour le traitement de l'air ou de l'eau.

Schématiquement, la réaction photocatalytique est initiée en activant un solide semi-conducteur par des rayonnements UV à une longueur d'onde inférieure à 380 nanomètres, provoquant des changements électroniques au sein du semi-conducteur et conduisant, en présence d'air ou d'eau, à la création de radicaux oxygénés à la surface du semi-conducteur. Ces radicaux attaquent les composés organiques adsorbés sur le semi-conducteur, et, par succession de réactions chimiques impliquant l'oxygène de l'air ou de l'eau, dégradent les composés organiques jusqu'à ce que le carbone des chaînes carbonées soit complètement transformé en dioxyde de carbone (CO₂).

La réaction photocatalytique est susceptible de transformer par le processus ci-avant décrit un grand nombre de polluants de l'air, et notamment les NOₓ, NH₃, H₂S, CO, O₃, les alcènes en C₂-C₄ chlorés ou non, le chlorométhane, l'iso-octane, le benzène, le toluène, le xylène, l'isopropylbenzène, les alcools aliphatiques saturés en C₁-C₄, le méthylmercaptan, le chlorophénol, le nitrophénol, le méthyltertiobutyléther, le diméthoxyméthane, les aldéhydes en C₁-C₄, l'acétone, l'acide formique, l'acide acétique, l'acide 2-méthylpropanoïque, le chlorure de dichloroacétyle, le diméthylformamide, le triméthylamine, l'acétonitrile, et la pyridine.

En pratique, on utilise en tant que solide semi-conducteur, c'est à dire en tant qu'agent photocatalyseur, du dioxyde de titane TiO₂ anatase lequel, activé par la lumière U.V., se trouve modifié électroniquement de sorte à conduire à la formation de radicaux hydroxyles OH^{•} et d'oxygène O^{•} aptes à attaquer les composés organiques adsorbés sur le TiO₂ en le dégradant jusqu'à ce que le carbone organique soit complètement transformé en dioxyde de carbone.

Toutefois, il est possible de mettre en oeuvre d'autres agents photocatalyseurs tels que par exemple, ceux choisis dans le groupe des oxydes métalliques, des oxydes alcalino terreux, des oxydes d'actinide et des oxydes de terres rares.

Pour le traitement de l'air et des effluents liquides, il est nécessaire de fixer les compositions photocatalytiques au moyen d'agents liants sur des supports, notamment des supports fibreux ou des supports de fibres de verre. Dans la suite de la description et dans les revendications, on désigne cette association « support-composition photocatalytique » par le terme « média filtrant ».

On a longtemps proposé en tant qu'agent liant, d'utiliser des molécules organiques du type acétate de polyvinyle, alcool polyvinylique....

On a rapidement constaté que cette mise en oeuvre ne pouvait être satisfaisante dans la mesure où les chaînes carbonées du liant étaient également soumises au processus de photocatalyse donc dégradées, de sorte que la durée de vie de la composition s'en trouvait limitée.

Pour résoudre ce problème, on a proposé diverses techniques consistant à éliminer le carbone du liant par calcination, notamment la technique de fixation du catalyseur par « Previously Made Titanium Powder (PMTP) » ou encore « Chemical Vapor Deposition (CVD)», décrites notamment dans la revue « CATALYSIS TODAY », vol ; 39 No 3page 221 et 222.

Toutefois, ce type de technique présente un certain nombre d'inconvénients, comme celui d'augmenter la durée et le coût de préparation de la composition. En outre et surtout, la calcination, effectuée à des températures de l'ordre de 1700°C, entraîne la formation de poudre qui rend la composition difficile à utiliser.

Pour résoudre ce problème, on a proposé dans le document FR-A-2 749 777, de remplacer le liant organique par un liant inorganique consistant en un polymère inorganique aluminosilicate de type imogolite.

La composition photocatalytique décrite dans ce document se présente sous forme d'un gel d'aluminosilicate auquel on ajoute une solution colloïdale d'agent photocatalyseur. Le temps de préparation du gel d'aluminosilicate est de l'ordre de plusieurs jours et nécessite une multitude d'étapes relativement compliquées. On obtient un gel thixotropique transparent au rayonnement solaire, nécessitant d'être fluidifié par agitation pour permettre une enduction régulière sur un support.

Plus précisément, pour fabriquer un média filtrant, le gel obtenu est appliqué sur un support puis séché selon une technique non précisée. Les différents essais montrent qu'on obtient une destruction des polluants de l'ordre de seulement 12 ou 26% en fonction de la source lumineuse mise en oeuvre (voir exemple 3).

Même si la composition photocatalytique décrite dans ce document présente l'avantage de pouvoir être enduite sur un support en une seule couche, non seulement la préparation de la composition est très compliquée mais elle conduit en outre à des résultats insuffisants.

Pour résoudre ce problème, on a proposé dans les documents JP-A-09/171801 et WO-A-97/00134, d'enduire la composition photocatalytique en tant que telle sur un support, par l'intermédiaire d'une couche adhésive. La couche adhésive est constituée d'une résine qui peut comprendre, dans certains modes de réalisation, de 5 à 40% en poids de silice colloïdale.

En d'autres termes, cette solution présente l'inconvénient d'une part, d'augmenter le nombre d'étapes nécessaire à la fabrication d'un média filtrant (enduction de deux couches successives sur le support), et d'autre part, de mettre en oeuvre des résines, par définitions organiques, susceptibles d'être consommées lors du processus de photocatalyse.

L'un des problèmes que se propose de résoudre l'invention est celui de fournir une composition photocatalytique simple à préparer à partir de constituants disponibles commercialement, et susceptible d'être enduite directement sur un support.

Un autre problème que se propose de résoudre l'invention est d'améliorer la capacité d'adsorption et l'efficacité photocatalytique, c'est à dire le rendement de l'agent photocatalyseur.

Pour résoudre le problème de fournir une composition simple à mettre en oeuvre et susceptible d'être appliquée sur un support en une seule couche, l'invention propose une composition photocatalytique comprenant au moins un agent photocatalyseur et un agent liant inorganique, caractérisée en ce que l'agent liant inorganique comprend une dispersion colloïdale aqueuse de dioxyde de silice (SiO₂), ladite dispersion colloïdale aqueuse du dioxyde de silice comprenant des particules de silice aptes à se lier entre elles après avoir enrobé l'agent photocatalyseur.

Par « dispersion colloïdale aqueuse de dioxyde de silice (SiO₂) », on désigne une dispersion de particules de silice amorphe, de surface spécifique élevée chargée négativement dans de l'eau. En pratique, la surface spécifique des particules de silice est supérieure à 80 m²/g, avantageusement 100 m²/g pour une granulométrie des particules comprise entre 25 et 30 nanomètres. De même, elle est supérieure à 300 m²/g, avantageusement 350 m²/g pour une granulométrie des particules comprise entre 4 et 6 nanomètres. Les particules de silice présentent à leur surface des groupes OH et des ions OH- qui forment une double couche électrique conférant ainsi, auxdites particules des propriétés autoliantes. Comme déjà dit, les particules de silice sont aptes à se lier entre elles après avoir enrobé les particules d'agents photocatalyseurs.

Pour résoudre le problème de l'amélioration de la capacité d'adsorption et de ) l'efficacité photocatalytique de la composition, l'agent liant est exclusivement constitué d'une dispersion colloïdale aqueuse de dioxyde de silice (SiO₂).

Il est en effet apparu de façon tout à fait surprenante que l'utilisation d'une dispersion colloïdale aqueuse de SiO₂ du type de celle décrite ci-avant permet d'améliorer fortement le taux d'adsorption des substances polluantes sur l'agent photocatalyseur ainsi que le rendement de la photocatalyse, ceci étant probablement dû aux propriétés autoliantes des particules de SiO₂.

Selon une première caractéristique de l'invention, les particules de SiO₂ représentent de 20 à 50 % en poids de la dispersion aqueuse colloïdale, avantageusement 48 % en poids.

Pour une concentration inférieure à 20 %, l'agent photocatalyseur est moins résistant aux frottements et se transforme en poudre.

Pour une concentration supérieure à 50 %, l'agent photocatalyseur perd de son activité.

Selon une autre caractéristique de l'invention, les particules de dioxyde de silice formant la dispersion aqueuse ont un diamètre compris entre 10 et 50 nanomètres, avantageusement entre 20 et 30 nanomètres.

Avantageusement, on utilise en tant qu'agent photocatalyseur, le dioxyde de titane (TiO₂) anatase seul.

Toutefois, l'agent photocatalyseur peut également résulter d'un mélange de plusieurs agents tels que TiO₂, oxyde de cérium etc...

Pour améliorer l'efficacité photocatalytique, les particules de dioxyde de titane (TiO₂) ont un diamètre compris entre 10 et 30 nanomètres.

De même, pour obtenir une efficacité d'adsorption optimale, la composition photocatalytique comprend de 10 à 60 parties (en sec) de la dispersion colloïdale aqueuse de dioxyde de silice, le complément à 100 parties étant constitué de TiO₂ anatase.

Avantageusement, la composition photocatalytique comprend 50 parties de la dispersion colloïdale aqueuse de dioxyde de silice et 50 parties de dioxyde de titane anatase.

Selon une autre forme de réalisation de l'invention, afin d'empêcher le développement de micro-organismes et de moisissures nuisibles contenus dans l'air ambiant, la composition photocatalytique comprend en outre des zéolites modifiées avec des ions métalliques.

Par « zéolite », on désigne un groupe d'aluminosilicates naturels hydratés des métaux alcalins ou alcalino-terreux.

En pratique, les ions métalliques sont choisis dans le groupe comprenant l'argent, le cuivre et le zinc et sont utilisés à raison de 1 à 3%. Avantageusement, la zéolite est modifiée avec 1,5% d'ions argent.

On a en effet constaté que ce type de composition permettait d'accélérer la destruction des micro-organismes et des moisissures contenues dans l'air ambiant tout en détruisant les polluants organiques à l'origine de certaines odeurs, en combinant les propriétés des zéolites modifiées celles de la photocatalyse décrite ci-avant.

Selon une forme avantageuse de réalisation de l'invention, la composition photocatalytique est constituée de (en poids) :
- 30 à 50%, avantageusement 47% de SiO₂
- 30 à 50%, avantageusement 47% de TiO₂ anatase
- 2 à 10% avantageusement 6% de zéolite à 2% d'argent

Selon une autre forme de réalisation de l'invention, afin d'adsorber les molécules organiques présentes dans les pics de pollution, la composition photocatalytique comprend en outre du charbon actif.

De façon connue, le charbon actif se présente sous forme de fibres ou de grains présentant une surface spécifique élevée et permettant ainsi d'adsorber les molécules organiques.

De la sorte, la composition photocatalytique en incluant du charbon actif, agira sur l'air ambiant en deux temps :
υ tout d'abord, adsorption des agents polluants présents dans les pics de pollution sur le charbon actif ;
υ ensuite, photocatalyse dégradant le polluant contenu dans le charbon actif, permettant ainsi la régénération dudit charbon actif.

En d'autres termes, la durée de vie de cette composition sera fortement augmentée par rapport à la durée de vie du charbon actif seul.

Selon une forme avantageuse de ce mode de réalisation, la composition photocatalytique est constituée de (en poids) :
υ 10 à 40 %, avantageusement 25 % de TiO₂ anatase,
υ 10 à 40 %, avantageusement 25 % de charbon actif,
υ 40 à 60 %, avantageusement 50 % de SiO₂.

L'invention se rapporte également au procédé de fabrication de la composition photocatalytique selon lequel sous agitation, on introduit l'agent photocatalyseur et le cas échéant les zéolites modifiées avec des ions métalliques et/ou du charbon actif dans la suspension aqueuse colloidale de silice jusqu'à obtention d'une suspension homogène pouvant être appliquée directement sur un support.

L'invention se rapporte donc aussi à l'utilisation de la composition photocatalytique sous forme de peinture.

L'invention concerne également un média filtrant. Comme déjà dit, par « média filtrant », on désigne l'association support - composition photocatalytique. De façon connue, un média filtrant peut être composé d'un ou plusieurs supports traités.

Ainsi, la composition photocatalytique de l'invention peut être déposée sur au moins une des faces d'un support. On a en effet constaté que grâce à leurs propriétés autoliantes, les particules de SiO₂ non seulement se liaient entre elles tout en enrobant les particules de TiO₂, mais se liaient également au support. En outre et surtout, on observe une forte augmentation du rendement de la photocatalyse, ceci étant probablement dû à la structure particulière des particules de SiO₂, qui permet de conserver une porosité élevée et une forte surface spécifique de la couche après séchage.

Contrairement au dépôt d'une composition transparente au rayons UV décrite dans le document FR-A-2 749 777, le dépôt réalisé avec la composition de l'invention est opaque aux rayons UV tout en gardant une efficacité optimale, propriété qui peut être mise en oeuvre dans des domaines d'application du type affiches, banderoles, papiers tentures.

Par ailleurs, on peut avoir recours à plusieurs types de supports tels que fibres de verre, support non tissé et ce, de façon non limitative.

Dans une autre forme de réalisation, le support se présente sous forme d'un panneau acoustique.

Par « panneau acoustique », on désigne notamment les dalles constitutives des doubles plafonds.

En pratique, la dalle est enduite de la composition photocatalytique.

La convection naturelle produit un mouvement d'air froid du bas de la pièce qui, tout en se réchauffant, monte vers le haut de la pièce pour ainsi rentrer au contact des dalles constitutives des plafonds qui, sous l'action de la lumière incandescente ou du jour, déclenchent une réaction photocatalytique conduisant à la destruction des gaz.

Le support peut également être un support fibreux organique de type papier. On a en effet constaté que l'utilisation d'une dispersion colloïdale aqueuse de SiO₂ permettait d'enrober les fibres organiques du support, de sorte que ledit support ne soit pas soumis à la réaction de photocatalyse et donc détérioré au fil du temps.

L'utilisation de la dispersion colloïdale de SiO₂ sur ce type de support permet donc d'augmenter la durée de vie du média filtrant.

Selon une forme de réalisation avantageuse de l'invention, une seule face du support du média filtrant est enduite de la composition photocatalytique de l'invention, l'autre face étant enduite d'une seconde composition apte à détruire les odeurs comprenant un dérivé de l'acide undécylénique.

Avantageusement, le dérivé de l'acide undécylénique est l'undécylénate de sodium ou encore de méthyl ou d'éthyl, et ce de façon non limitative.

Afin de détruire les insectes de type acariens, ladite seconde composition comprend également du dioctyl sulfosuccinate.

On a en effet constaté que ce type de composition permettait de combiner et de potentialiser plusieurs actions différentes à savoir :
- celle du dérivé d'acide undécylénique qui assure la destruction des odeurs, notamment du type amines, dérivés soufrés etc...
- celle du dioctyl sulfosuccinate qui agit en détruisant la kératine des acariens.

En pratique, ladite seconde composition contient (en poids sec) :
- de 80 à 98%, avantageusement 96% d'undécylénate de sodium,
- de 2 à 20%, avantageusement 4% de dioctylsulfosuccinate

Dans une variante, outre un support enduit de la composition photocatalytique, le média filtrant comprend un préfiltre sous forme d'un support enduit d'une composition apte à détruire les odeurs et les insectes de type acariens comprenant un dérivé d'acide undécylénique et de dioctyl sulfosuccinate.

L'invention concerne également le procédé de fabrication d'un média filtrant comprenant un support sur lequel on enduit la composition photocatalytique de l'invention à raison de 5 à 40 g/m², avantageusement 20g/m² de TiO₂.

Pour une valeur inférieure à 5 g/m², la réaction de photocatalyse est réduite compte tenu de la trop faible épaisseur de la couche de la composition photocatalytique sur le support.

Pour une valeur supérieure à 40 g/m², on n'observe pas d'augmentation du rendement photocatalytique.

Dans la forme de réalisation selon laquelle le média filtrant présente une face de support ou un préfiltre enduite d'une composition à base d'acide undécylénique et de sulfosuccinate, cette enduction est effectuée à raison de 2 g/m².

En outre, le procédé de fabrication du média filtrant de l'invention présente l'avantage de pouvoir être réalisé en continu, l'enduction pouvant être effectuée notamment par size press, ou tout autre procédé d'imprégnation ou d'enduction traditionnelle, ce qui rend le procédé très simple par rapport à l'art antérieur.

Dans le cas de papiers tentures ou encore de panneaux acoustiques, la composition de l'invention peut se présenter sous forme d'une peinture à appliquer directement sur le support.

Ces médias filtrants peuvent être donc utilisés pour le traitement et l'épuration de l'air, mais également pour le traitement d'effluents liquides.

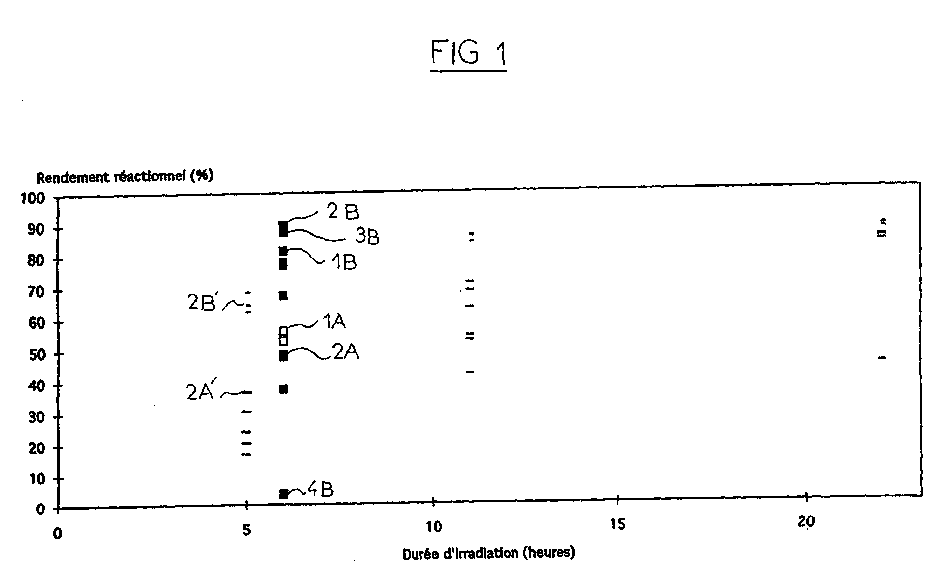

L'invention et les avantages qui en découlent ressortiront mieux des exemples de réalisation suivants à l'appui de la figure 1 annexée, laquelle représente le rendement réactionnel de la composition photocatalytique, objet de l'invention.

### Exemple 1

L'expérience suivante montre l'amélioration de la capacité d'adsorption et du rendement photocatalytique de la composition photocatalytique de l'invention par comparaison avec un média filtrant de l'art antérieur.

Le test consiste à immerger un disque support enduit d'une composition photocatalytique dans une solution d'alcool isopropylique, puis de soumettre le disque à l'action des rayons ultra-violets de longueur d'onde inférieure à 380 nanomètres, pendant 90 minutes. Sous l'effet des rayons UV, une partie de l'alcool isopropylique est transformée en acétone et révèle ainsi l'efficacité photocatalytique du dioxyde de titane.

Le disque est constitué d'un support fibreux enduit d'une composition photocatalytique constituée de :
- 50 parties de liants
- 50 parties de TiO₂.

Les exemples 1, 2, 3, 4 sont réalisés avec divers types de TiO₂ enduits sur le disque de surface égale à 18 cm², à raison de 4,5 à 17 g/m². Le liant inorganique utilisé est une dispersion colloïdale de SiO₂ commercialisée par NISSAN sous la marque « SNOWTEX 50 ».

L'exemple 5 met en oeuvre un média filtrant commercialisé par MATRIX dans lequel la liaison du TiO₂ avec le support est réalisé par calcination de l'agent liant. Les analyses sont effectuées par chromatographie en phase gazeuse.

Les résultats figurent dans le tableau suivant :

**TABLEAU 1**

| | **Exemple 1** TiO₂ DT51¹ 16 g/m² | **Exemple 2** TiO₂ REF2² 17 g/m² | **Exemple 3** TiO₂ REF2 4,5 g/m² | **Exemple 4** TiO₂ P-25³ 12,5 g/m² | **Exemple 5** Média filtrant Art antérieur⁴ 2,88 g/m² |
|---|---|---|---|---|---|
| **Quantité d'acétone formée/µmol** | **46** | **69** | **50** | **71** | **26,5** |

| | | | | | |
|---|---|---|---|---|---|
| 1 : DT 51® : TiO₂ commercialisé par RHODIA | | | | | |
| 2 : REF2 : TiO₂ de surface spécifique égale à 75 m²/g | | | | | |
| 3 : commercialisé par DEGUSSA | | | | | |
| 4 : commercialisé par MATRIX | | | | | |

On constate que le dernier disque engendre la formation d'une quantité d'acétone très faible par rapport à la composition photocatalytique de l'invention. On constate également qu'un dépôt de TiO₂ compris entre 4,5 g/m² et 12,5 g/m² (exemples 3 et 4), permet d'obtenir une bonne efficacité photocatalytique.

### Exemple 2

On a calculé le rendement réactionnel de diverses compositions selon l'invention enduites sur un support du type non tissé (référence 1045) fabriqué par AHLSTROM LYSTIL et perforé par le procédé PERFOJET de façon à améliorer les débits traversants (faible perte de charge). Le polluant mis en oeuvre est l'isobutane.

La composition contient deux types de TiO₂ différents de surface spécifique respectivement égale à 250 m²/g (désigné REF 1) et 75 m²/g (REF 2).

Sur le tableau suivant, on a représenté l'ensemble des paramètres essentiels, à savoir les proportions de chacun des constituants, la surface irradiée, la durée d'irradiation et le rendement réactionnel moyen, et le dépôt 10 ou 20 g/m² de TiO₂ (REF 1 ou REF 2).

**TABLEAU 2**

| | Liant*/TiO₂ en partie en sec | Surface cm² | Durée d'irradiation h | Rendement réactionnel % moyenne |
|---|---|---|---|---|
| 1A | | 64,5 | 6 | |
| REF 1 | 20/80 | 65,8 | 6 | 54,30 |
| 10 g/m² | | 65,8 | 6 | |
| 1B | | 67,4 | 6 | |
| REF 2 | 20/80 | 67,5 | 6 | 75,38 |
| 10 g/m² | | 65,7 | 6 | |
| 1C | | 65,2 | 6 | |
| REF 2 | 20/80 | 65,4 | 6 | 75,50 |
| 20 g/m² | | 65,7 | 6 | |
| 2A | | 64,5 | 6 | |
| REF 1 | 50/50 | 64,8 | 6 | 44,58 |
| 10 g/m² | | 68,2 | 6 | |
| 2A' | | 67,8 | 5 | |
| REF 1 | 50/50 | 67,8 | 5 | 36,40 |
| 10 g/m² | | 67,8 | 5 | |
| 2B | | 66,2 | 6 | |
| REF 2 | 50/50 | 65,1 | 6 | 88,52 |
| 10 g/m² | | 65,1 | 6 | |
| 2B' | | 67,8 | 5 | |
| REF 2 | 50/50 | 67,8 | 5 | 64,75 |
| 10 g/m² | | 67,8 | 5 | |
| 2C | | 66,2 | 6 | |
| REF 2 | 50/50 | 66,2 | 6 | 81,53 |
| 20 g/m² | | 66,4 | 6 | |
| 3B | | 67,2 | 6 | |
| REF 2 | 50/50 | 67,2 | 6 | 84,03 |
| 10 g/m² | | 67,2 | 6 | |
| 4B | | 66,9 | 6 | |
| REF 2 | 50/50 | 64,8 | 6 | 2,95 |
| 10 g/m² | | 66,9 | 6 | |
| | | | sans C4H10 | |

| | | | | |
|---|---|---|---|---|
| *Snowtex 50 commercialisé par NISSAN. | | | | |

On constate que les meilleurs rendements réactionnels sont obtenus avec des compositions de l'invention contenant 50 parties de la dispersion aqueuse colloïdale (SiO₂) de silice et 50 parties de dioxyde de titane REF 2.

On remarque également que des dépôts de 10g/m² de TiO₂ engendrent des rendements réactionnels supérieurs à des dépôts de 20 g/m², toutes autres conditions étant identiques, ce qui conduit à réduire le coût des médias filtrants.

Lorsque l'essai est réalisé sans le polluant organique isobutane, le rendement photocatalytique est pratiquement nul, ce qui est logique. On peut estimer que la faible valeur obtenue dans ce cas (2,95 %) correspond à la décomposition de matières organiques parasites. Les chiffres du tableau sont donc significatifs à 3 % près.

Sur la figure 1 annexée, on a représenté le rendement réactionnel obtenu pour les compositions photocatalytiques enduites à raison de 10 g/m2 de TiO₂, soit les exemples 1A, 1B, 2A, 2A', 2B, 2B', 3B et 4B.

### Exemple 3

On a évalué dans cet exemple l'efficacité de la composition photocatalytique de l'invention incluant du charbon actif.

Pour ce faire, on enduit une composition photocatalytique sur un support de type non tissé (référence 1045) fabriqué par AHLSTROM LYSTIL, et perforé par le procédé PERFOJET.

La composition photocatalytique est constituée de :
υ 25 % de TiO₂ de surface spécifique égale à 250 m2/g
υ 25 % de charbon actif de surface spécifique égale à 900 m2/g et commercialisé par CECA
υ 50 % en poids de SiO₂ (Snowtex 50).

Le média est irradié par du méthanol à un débit de 3,4 ml/min, la teneur en polluant étant égale à 281 ppm, avec ou sans phase de saturation à l'obscurité.

Les résultats obtenus à l'équilibre sous UV sont identiques que le média ait été saturé ou non.

On obtient :
υ une quantité de méthanol égale à 22,3 micromoles par heure et par gramme ;
υ une quantité de dioxyde de carbone (CO₂) égale à 8,65 micromoles par heure et par gramme.

Le pourcentage de minéralisation, c'est-à-dire de transformation de l'agent polluant en CO₂ est de 30 %.

Le bilan en carbone, résultant de la dégradation du méthanol en sous-produit volatile, est égal à 56 %.

Les avantages de l'invention ressortent bien de la description. On notera en particulier, la forte capacité d'adsorption et l'efficacité remarquable du TiO₂ lorsqu'il est en mélange avec une dispersion aqueuse colloïdale de silice.

On notera également la simplification du procédé de fabrication du média filtrant en faisant appel notamment à des techniques d'imprégnation ou d'enduction en continu, notamment par Size-press.

## Revendications

1. Composition photocatalytique comprenant au moins un agent photocatalyseur et au moins un liant inorganique, **caractérisée en ce que** ledit liant inorganique comprend une dispersion colloïdale aqueuse de dioxyde de silice (SiO₂), dans laquelle les particules de SiO₂ représentent de 20 à *50* % en poids de la dispersion aqueuse colloïdale et ont un diamètre compris entre 10 et 40 nanomètres, lesdites particules de silice étant aptes à se lier entre elles après avoir enrobé l'agent photocatalyseur.

2. Composition photocatalytique selon la revendication 1, **caractérisée en ce que** l'agent liant est exclusivement constitué d'une dispersion colloïdale aqueuse de dioxyde de silice (SiO₂).

3. Composition photocatalytique selon l'une des revendications 1 à 2, **caractérisée en ce que** l'agent photocatalyseur est le TiO₂ anatase.

4. Composition photocatalytique selon la revendication 3, **caractérisée en ce que** le diamètre des particules de TiO₂ est compris entre 10 et 30 nanomètres.

5. Composition photocatalytique selon l'une des revendications 1 à 4, **caractérisée en ce qu'**elle comprend de 10 à 60 parties (en sec) de la dispersion colloïdale aqueuse de dioxyde de silice, le complément à 100 parties étant constitué du TiO₂.

6. Composition photocatalytique selon la revendication 5, **caractérisée en ce qu'**elle comprend 50 parties de dioxyde de titane et 50 parties de la dispersion colloïdale aqueuse de dioxyde de silice.

7. Composition photocatalytique selon l'une des revendications 1 à 6, **caractérisée en ce qu'**elle comprend en outre des zéolites modifiées avec des ions métalliques aptes à empêcher le développement de micro-organismes et de moisissures nuisibles.

8. Composition photocatalytique selon l'une des revendications 1 à 7, **caractérisée en ce qu'**elle comprend en outre du charbon actif.

9. Procédé pour la fabrication d'une composition photocatalytique selon l'une des revendication 1 à 6, **caractérisé en ce que** sous agitation, on mélange l'agent photocatalyseur dans le liant inorganique jusqu'à obtention d'une suspension homogène.

10. Procédé pour la fabrication d'une composition photocatalytique selon la revendication 7, **caractérisé en ce que** sous agitation, on mélange l'agent photocatalyseur et les zéolites modifiées avec des ions métalliques dans le liant inorganique jusqu'à obtention d'une suspension homogène.

11. Procédé pour la fabrication d'une composition photocatalytique selon la revendication 8, **caractérisé en ce que** sous agitation, on mélange l'agent photocatalyseur et le charbon actif jusqu'à obtention d'une suspension homogène.

12. Utilisation de la composition photocatalytique objet d'une des revendications 1 à 8 sous forme de peinture.

13. Média filtrant comprenant un support enduit sur au moins une de ses faces d'une couche de la composition photocatalytique selon l'une des revendications 1 à 8.

14. Média filtrant selon la revendication 13, **caractérisé en ce que** le support est un support fibreux.

15. Média filtrant selon la revendication 13, **caractérisé en ce que** le support est un panneau acoustique.

16. Média filtrant selon l'une des revendications 13 à 15, **caractérisé en ce que** lorsque l'une des faces du support est enduite de ladite composition photocatalytique, l'autre face du support est enduite d'une seconde composition apte à détruire les odeurs comprenant un dérivé de l'acide undécylénique.

17. Média filtrant selon la revendication 16, **caractérisé en ce que** ladite seconde composition comprend en outre du dioctyl sulfosuccinate apte à détruire les insectes de type acariens.

18. Média filtrant selon l'une des revendications 13 à 17, **caractérisé en ce qu'**il comprend en outre un préfiltre sous forme d'un support enduit de ladite seconde composition apte à détruire les odeurs comprenant un dérivé d'acide undécylénique.

19. Média filtrant selon la revendication 18, **caractérisé en ce que** ladite seconde composition comprend en outre du dioctyl sulfosuccinate apte à détruire les insectes de type acariens.

20. Procédé pour la fabrication d'un média filtrant selon l'une des revendications 13 à 19, **caractérisé en ce qu'**on enduit le support de la composition photocatalytique selon l'une des revendications 1 à 8 à raison de 5 à 40 g/m² de TiO₂.

21. Procédé pour la fabrication d'un média filtrant selon l'une des revendications 13 à 19, **caractérisé en ce que** ladite seconde composition est enduite à raison de 2g/m² sur le support.

22. Utilisation d'un média filtrant selon l'une des revendications 13 à 19, pour le traitement de l'air.

23. Utilisation d'un média filtrant selon l'une des revendications 13 à 19, pour le traitement d'effluents liquides.

## Patentansprüche

1. Photokatalytische Zusammensetzung enthaltend wenigstens einen Photokatalysator und wenigstens ein anorganisches Bindemittel, **dadurch gekennzeichnet, dass** das genannte anorganische Bindemittel eine wässrige Kolloiddispersion aus Siliziumdioxid (SiO₂) enthält, bei der die SiO₂-Teilchen 20 bis 50 Gew.% der wässrigen Kolloiddispersion ausmachen und einen Durchmesser zwischen 10 und 40 Nanometern aufweisen, wobei die genannten Kieselerdeteilchen in der Lage sind, sich nach Umhüllen des Photokatalysators miteinander zu verbinden.

2. Photokatalytische Zusammensetzung nach Anspruch 1, **dadurch gekennzeichnet, dass** das Bindemittel ausschließlich von einer wässrigen Kolloiddispersion aus Siliziumdioxid (SiO₂) gebildet ist.

3. Photokatalytische Zusammensetzung nach einem der Ansprüche 1 bis 2, **dadurch gekennzeichnet, dass** der Photokatalysator TiO₂-Anatas ist.

4. Photokatalytische Zusammensetzung nach Anspruch 3, **dadurch gekennzeichnet, dass** der Durchmesser der TiO₂-Teilchen zwischen 10 und 30 Nanometern liegt.

5. Photokatalytische Zusammensetzung nach einem der Ansprüche 1 bis 4, **dadurch gekennzeichnet, dass** sie 10 bis 60 Teile (trocken) der wässrigen Kolloiddispersion aus Siliziumdioxid enthält, wobei die Ergänzung zu 100 Teilen von TiO₂ gebildet ist.

6. Photokatalytische Zusammensetzung nach Anspruch 5, **dadurch gekennzeichnet, dass** sie 50 Teile Titandioxid und 50 Teile der wässrigen Kolloiddispersion aus Siliziumdioxid enthält.

7. Photokatalytische Zusammensetzung nach einem der Ansprüche 1 bis 6, **dadurch gekennzeichnet, dass** sie außerdem mit Metallionen modifizierte Zeolithen enthält, welche die Entwicklung von schädlichen Mikroorganismen und Schimmelpilzen verhindern können.

8. Photokatalytische Zusammensetzung nach einem der Ansprüche 1 bis 7, **dadurch gekennzeichnet, dass** sie weiterhin Aktivkohle enthält.

9. Verfahren zur Herstellung einer photokatalytischen Zusammensetzung nach einem der Ansprüche 1 bis 6, **dadurch gekennzeichnet, dass** der Photokatalysator unter Rühren in dem anorganischen Bindemittel bis zum Erhalt einer homogenen Suspension gemischt wird.

10. Verfahren zur Herstellung einer photokatalytischen Zusammensetzung nach Anspruch 7, **dadurch gekennzeichnet, dass** der Photokatalysator und die mit Metallionen modifizierten Zeolithen unter Rühren in dem anorganischen Bindemittel bis zum Erhalt einer homogenen Suspension gemischt werden.

11. Verfahren zur Herstellung einer photokatalytischen Zusammensetzung nach Anspruch 8, **dadurch gekennzeichnet, dass** der Photokatalysator und die Aktivkohle unter Rühren bis zum Erhalt einer homogenen Suspension gemischt werden.

12. Verwendung der photokatalytischen Zusammensetzung nach einem der Ansprüche 1 bis 8 in Form eines Anstrichmittels.

13. Filtrationsmittel enthaltend einen Träger, der auf wenigstens einer seiner Seiten mit einer Schicht aus der photokatalytischen Zusammensetzung nach einem der Ansprüche 1 bis 8 überzogen ist.

14. Filtrationsmittel nach Anspruch 13, **dadurch gekennzeichnet, dass** der Träger ein Faserträger ist.

15. Filtrationsmittel nach Anspruch 13, **dadurch gekennzeichnet, dass** der Träger eine Akustikplatte ist.

16. Filtrationsmittel nach einem der Ansprüche 13 bis *15,* **dadurch gekennzeichnet, dass** wenn eine der Seiten des Trägers mit der genannten photokatalytischen Zusammensetzung überzogen ist, die andere Seite des Trägers mit einer zweiten, ein Derivat der Undecylensäure enthaltenden Zusammensetzung überzogen ist, welche Gerüche tilgen kann.

17. Filtrationsmittel nach Anspruch 16, **dadurch gekennzeichnet, dass** die genannte zweite Zusammensetzung außerdem Dioctylsulfosuccinat enthält, das Insekten vom Milbentyp vernichten kann.

18. Filtrationsmittel nach einem der Ansprüche 13 bis 17, **dadurch gekennzeichnet, dass** es weiterhin einen Vorfilter in Form eines Trägers enthält, der mit der genannten zweiten, ein Derivat der Undecylensäure enthaltenden Zusammensetzung überzogen ist, die Gerüche tilgen kann.

19. Filtrationsmittel nach Anspruch 18, **dadurch gekennzeichnet, dass** die genannte zweite Zusammensetzung weiterhin Dioctylsulfosuccinat enthält, das Insekten vom Milbentyp vernichten kann.

20. Verfahren zur Herstellung eines Filtrationsmittels nach einem der Ansprüche 13 bis 19, **dadurch gekennzeichnet, dass** der Träger mit der photokatalytischen Zusammensetzung nach einem der Ansprüche 1 bis 8 in einer Menge von 5 bis 40 g/m² TiO₂ überzogen wird.

21. Verfahren zur Herstellung eines Filtrationsmittels nach einem der Ansprüche 13 bis 19, **dadurch gekennzeichnet, dass** die genannte zweite Zusammensetzung in einer Menge von 2 g/m² auf den Träger aufgetragen wird.

22. Verwendung eines Filtrationsmittels nach einem der Ansprüche 13 bis 19 zur Behandlung von Luft.

23. Verwendung eines Filtrationsmittels nach einem der Ansprüche 13 bis 19 zur Behandlung von Flüssigabfällen.

## Claims

1. A photocatalytic composition comprising at least one photocatalyzing agent and at least one inorganic binder, **characterized in that** the inorganic binder comprises an aqueous colloidal dispersion of silicon dioxide (SiO₂), in which the SiO₂ particles represent from 20 to 50% by weight of the colloidal aqueous dispersion, the diameter of the silicon dioxide particles being between 10 and 40 nanometers, said silica particles being capable of bonding together after having coated the photocatalyzing agent.

2. The photocatalytic composition as claimed in claim 1, **characterized in that** the binding agent consists exclusively of an aqueous colloidal dispersion of silicon dioxide (SiO₂).

3. The photocatalytic composition as claimed in claims 1 or 2, **characterized in that** the photocatalyzing agent is anatase TiO₂.

4. The photocatalytic composition as claimed in claim 3, **characterized in that** the diameter of the TiO₂ particles is between 10 and 30 nanometers.

5. The photocatalytic composition as claimed in one of claims 1 to 4, **characterized in that** it comprises from 10 to 60 parts (as dry matter) of the aqueous colloidal dispersion of silicon dioxide, the balance to 100 parts consisting of TiO₂.

6. The photocatalytic composition as claimed in claim 5, **characterized in that** it comprises 50 parts of titanium dioxide and 50 parts of the aqueous colloidal dispersion of silicon dioxide.

7. The photocatalytic composition as claimed in one of claims 1 to 6, **characterized in that** it furthermore includes zeolites modified by metal ions capable of preventing the development of undesirable microorganisms and fungi.

8. The photocatalytic composition as claimed in one of claims 1 to 7, **characterized in that** it furthermore includes active carbon.

9. A process for manufacturing a photocatalytic composition as claimed in one of claims 1 to 6, **characterized in that**, while stirring, the photocatalyzing agent is mixed into the inorganic binder until a homogeneous suspension is obtained.

10. A process for manufacturing a photocatalytic composition as claimed in claim 7, **characterized in that**, while stirring, the photocatalyzing agent and the zeolites modified by metal ions are mixed into the inorganic binder until a homogeneous suspension is obtained.

11. A process for manufacturing a photocatalytic composition as claimed in claim 8, **characterized in that**, while stirring, the photocatalyzing agent and the active carbon are mixed so as to obtain a homogeneous suspension.

12. Use of the photocatalytic composition according to one of claims 1 to 8 in the form of paint.

13. A filtering medium comprising a support coated on at least one of its faces with a layer of the photocatalytic composition as claimed in one of claims 1 to 8.

14. The filtering medium as claimed in claim 13, **characterized in that** the support is a fibrous support.

15. The filtering medium as claimed in claim 13, **characterized in that** the support is an acoustic panel.

16. The filtering medium as claimed in one of claims 13 to 15, **characterized in that** when one of the faces of the support is coated with said photocatalytic composition, the other face of the support is coated with a second composition capable of eliminating odors, comprising a derivative of undecylenic acid.

17. The filtering medium as claimed in claim 16, **characterized in that** said second composition furthermore includes dioctyl sulfosuccinate capable of destroying mite-type insects.

18. The filtering medium as claimed in one of claims 13 to 17, **characterized in that** it furthermore includes a prefilter in the form of a support coated with said second composition capable of eliminating odors, comprising a derivative of undecylenic acid.

19. The filtering medium as claimed in claim 18, **characterized in that** said second composition furthermore includes dioctyl sulfursuccinate capable of destroying mite-type insects.

20. A process for manufacturing a filtering medium as claimed in one of claims 13 to 19, **characterized in that** the support is coated with the photocatalytic composition as claimed in one of claims 1 to 8 in an amount from 5 to 40 g/m² of TiO₂.

21. A process for manufacturing a filtering medium as claimed in one of claims 13 to 19, **characterized in that** said second composition is coated in an amount of 2 g/m² on the support.

22. The use of a filtering medium as claimed in one of claims 13 to 19, for the treatment of air.

23. Use of a filtering medium as claimed in one of claims 13 to 19, for the treatment of liquid effluents.
